# EUROPEAN PATENT SPECIFICATION

(11) **EP 2 176 115 B1**
(45) Date of publication and mention of the grant of the patent: **27.04.2011**
(21) Application number: 09787907.6
(22) Date of filing: 30.07.2009
(51) Int. Cl.: B62J 35/00, B62J 37/00

(54) **SCOOTER TYPE VEHICLE**
ROLLERARTIGES FAHRZEUG
VÉHICULE DE TYPE SCOOTER

(30) Priority: 01.08.2008 JP 2008200112; 19.02.2009 JP 2009036380
(43) Date of publication of application: 21.04.2010
(73) Proprietor: Yamaha Hatsudoki Kabushiki Kaisha, Iwata-shi, Shizuoka 438-8501 (JP)
(72) Inventor: MOCHIZUKI, Kan, Shizuoka, 4388501 (JP); OOHIRA, Masaru, Shizuoka, 4388501 (JP); WANG, Hsing-yang, Shizuoka, 4388501 (JP)
(74) Representative: Schoppe, Fritz
(86) International application number: PCT/JP2009/003624
(87) International publication number: WO 2010/013480

(56) References cited:
- EP-A2- 1 457 413
- JP-A- 2 193 786
- JP-A- 6 008 864
- JP-A- 7 069 263

## Description

### Technical Field

The present invention relates to a scooter type vehicle.

### Background Art

A scooter type vehicle includes a seat, a footboard and a leg shield. The footboard is disposed in front of the seat while positioned lower than the seat. The leg shield is extended upward from the front end of the footboard. A space between the seat and the leg shield is used for disposing legs of a rider when the rider puts his/her feet on the footboard.

Also, the scooter vehicle is provided with a fuel filler opening for replenishing fuel. In some conventional scooter type vehicles, the fuel filler opening is provided in the leg shield (see Patent Literature 1).

### Citation List

### Patent Literature

PTL 1: Japanese Laid-open Patent Application No. 2003-246287

### Summary of Invention

### Technical Problem

According to the scooter type vehicle disclosed in the patent literature 1, the fuel filler opening is provided in the leg shield. With the structure, the scooter type vehicle is allowed to be easily fueled.

However, when the fuel filler opening is provided to the leg shield as described above, the leg shield is formed in a rearwardly budging shape. As a result, the space for the rider's legs may be reduced.

JP 02193786 A discloses a scooter type vehicle according to the preamble of claim 1. In particular JP 02193786 A discloses a scooter having a vehicle body frame including a head pipe, a front frame, a rear frame, a front fork, a steering shaft, a suspension for a front wheel, a front wheel, a seat and a vehicle body cover. The vehicle body cover comprises a footboard disposed in front of the seat and lower than the same, a leg shield extending upward from a front part of the footboard, a fuel tank disposed underneath the footboard and a fuel filler tube disposed behind the leg shield. The fuel filler tube is arranged such that it extends essentially parallel to the front frame and behind the same. A fuel filler opening is disposed behind a lid disposed on the front surface of the front panel.

EP 1457413 A2 discloses a motorcycle of the scooter-type having a fuel tank which is arranged along the region including the head pipe, a downtube and a front side of a backstay of the scooter. An oil filler port is disposed at the top of the fuel tank close to the head pipe.

JP 06008864 A discloses a scooter having a body cover including a footboard and a leg shield. A fuel tank is disposed below the footboard. A fuel filler tube connected to the fuel tank has a fuel filler opening extending from the leg shield towards the exterior.

JP 07069263 A discloses a scooter having a vehicle body comprising a footboard and a leg shield. A fuel tank is arranged below the footboard. The fuel tank is connected via a fuel supply tube to a fuel filler opening. The fuel filler opening is arranged behind a lid of a storage box arranged at the rear side of the leg shield.

It is an object of the present invention to provide a scooter type vehicle wherein it is easy to supply fuel and a large space can be ensured for rider's legs without increasing the entire vehicle size.

This object is achieved by a scooter type vehicle according to claim 1.

The scooter vehicle according to an aspect of the present invention includes a vehicle body frame including a head pipe, a front frame extending obliquely downward and rearward from the head pipe, and a rear frame extending rearward from a bottom part of the front frame. The scooter vehicle further includes a front fork rotatably supported by the head pipe, the front fork including a steering shaft inserted into the head pipe, a front wheel disposed in front of the front frame, the front wheel supported by the front fork, the front wheel allowed to rotate with respect to the head pipe, and a seat disposed on the upper part of the rear frame; a vehicle body cover including a footboard disposed in front of the seat, the footboard positioned lower than the seat. The scooter vehicle further includes a leg shield extending upward from the front part of the footboard, the leg shield covering the rear of the front frame; a fuel tank for storing fuel, the fuel tank disposed underneath the footboard; and a fuel filler part disposed in the leg shield, the fuel filler part having a fuel filler opening for supplying fuel to the fuel tank, the fuel filler opening disposed below a connection part between the head pipe and the front frame. The front fork further includes an under bracket disposed in front of the front frame, the under bracket coupled to a bottom end of the steering shaft, and a suspension having an upper end coupled to the under bracket. The fuel filler opening is disposed to the side of the front frame while overlapping with the front frame in a side view of the vehicle. The fuel filler opening is disposed higher than the under bracket. A ridge protruding rearward from the leg shield is provided in the leg shield. The fuel filler part is disposed in a top surface of the ridge so as to be partially exposed to the exterior of the ridge.

### Advantageous Effects of Invention

With the scooter type vehicle according to the present invention, it is easy to supply fuel and comfortableness can be ensured for rider's legs without increasing the entire vehicle size.

### Brief Description of Drawings

[fig.1]FIG. 1 is a left side view of a scooter type vehicle.
[fig.2]FIG. 2 is a left side view of a vehicle frame.
[fig.3]FIG. 3 is a right side view of the scooter type vehicle.
[fig.4]FIG. 4 is a diagram for illustrating the internal configuration of a fuel filler part.
[fig.5]FIG. 5 is a diagram for illustrating a positional relationship between a fuel filler opening and a head pipe.
[fig.6]FIG. 6(a) is a diagram for illustrating the scooter type vehicle according to a present embodiment, whereas FIG. 6(b) is a diagram for illustrating a case of the scooter type vehicle of the present embodiment in which a position of the fuel filler opening is restored to a position of a conventional fuel filler opening.

### Description of Embodiments

### <Structure>

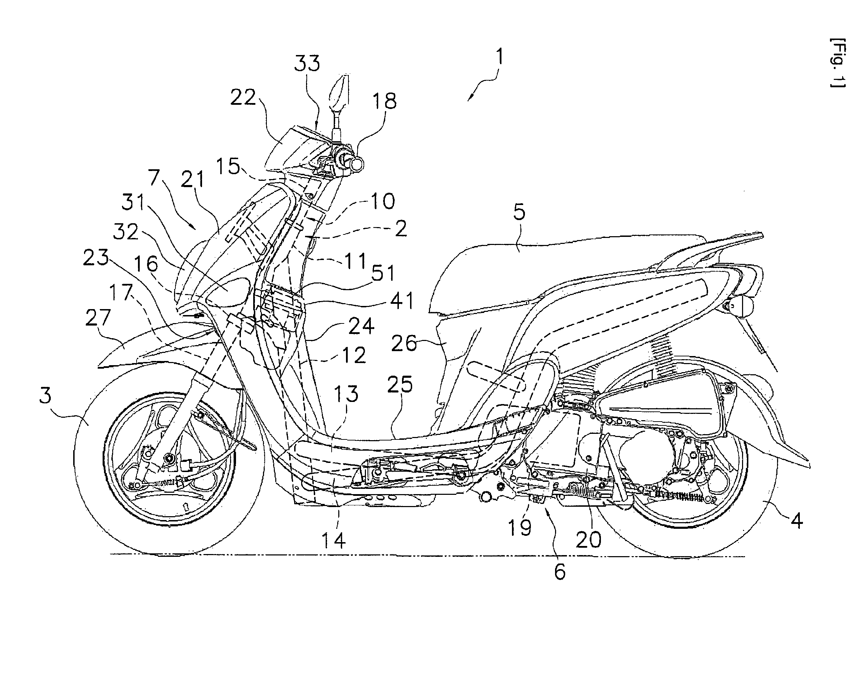

FIG. 1 illustrates a left side view of a scooter vehicle 1 according to an embodiment of the present invention. The scooter vehicle 1 includes a vehicle body frame 2, a front wheel 3, a rear wheel 4, a seat 5, a power unit 6, and a vehicle body cover 7. In the following description, the term "front" indicates a traveling direction of the vehicle. The term "rear" indicates an opposite direction to the traveling direction of the vehicle. The term "right" indicates a right direction when the vehicle is directed to the traveling direction. The term "left" indicates a left direction when the vehicle is directed to the traveling direction.

The vehicle body frame 2 has a head pipe 11, a front frame 12, and a pair of left and right rear frames 13, 14.

The head pipe 11 is disposed at an incline so that the bottom end thereof is positioned further forward than the top end thereof. A front fork 10 is rotatably supported by the head pipe 11. The front fork 10 includes a steering shaft 15, an under bracket 16, and a pair of right and left suspensions 17. The steering shaft 15 is inserted into the head pipe 11. The steering shaft 15 is rotatably supported by the head pipe 11. The under bracket 16 is coupled to the bottom end of the steering shaft 15. The under bracket 16 is configured to rotate in conjunction with the rotation of the steering shaft 15. The under bracket 16 is disposed in front of the front frame 12. The upper ends of the pair of suspensions 17 are attached to the under bracket 16. The front wheel 3 is supported at the bottom ends of the suspensions 17, and is accordingly allowed to rotate with respect to the head pipe 11. A steering handle 18 is fixed at the top end of the steering shaft 15.

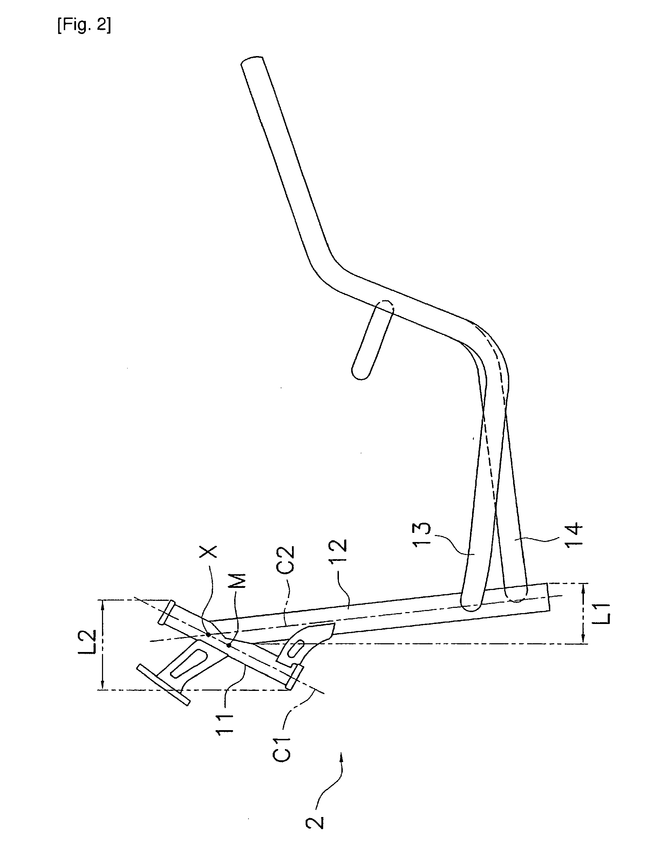

The front frame 12 is fixed to the head pipe 11. The front frame 12 is disposed at an incline so that the bottom end thereof is positioned further rearward than the top end thereof. The front frame 12 is extended obliquely downward from the rear of the head pipe 11. A length L1 of the front frame 12 in the longitudinal direction of the vehicle is less than a length L2 of the head pipe 11 in the longitudinal direction of the vehicle, as illustrated in FIG. 2. Therefore, the inclination angle of the front frame 12 with respect to a vertical line is approximately right angle in a side view. The inclination angle is set to be within 10 degrees of the right angle in the present embodiment. The head pipe 11 and the front frame 12 are positioned in the transverse center of the vehicle. Additionally, the front wheel 3 is positioned in front of the front frame 12.

Furthermore, in a side view, a connecting part X between the head pipe 11 and the front frame 12 is positioned higher than a center position M of the head pipe 11 in the axial direction. The connecting part X between the head pipe 11 and the front frame 12 herein indicates an intersection between an axis C1 of the head pipe 11 and an axis C2 of the front frame 12. The center position M of the head pipe 11 in the axial direction herein indicates the vertically center point on the axis C 1 of the head pipe 11.

The rear frames 13, 14 are connected to the bottom end of the front frame 12. The rear frames 13, 14 pass underneath a footboard 25 while extending obliquely rearward and upward from the bottom part of the front frame 12. The rear frame 13 is disposed on the left side of the vehicle body, whereas the rear frame 14 is disposed on the right side of the vehicle body. In FIG. 2, the front end of the rear frame 13 is connected to the front frame 12 at a higher point than the front end of the rear frame 14. However, the front end of the rear frame 13 and the front end of the rear frame 14 may be connected to the front frame 12 in the same height positions. In FIG. 2, the front frame 12 and the rear frames 13, 14 are formed from separate members. However, the front frame 12 and the rear frames 13, 14 may also be formed continuously (integrally). The seat 5 is disposed above the rear of the rear frames 13, 14, as illustrated in FIG. 1.

The power unit 6 is supported on the rear frames 13, 14. The power unit 6 has an engine 19 and a transmission device 20 for transmitting power from the engine 19 to the rear wheel 4. The rear wheel 4 is rotatably supported at the rear end of the transmission device 20.

The vehicle body cover 7 is a resinous member for covering the vehicle body. The vehicle body cover 7 has a front cover 21, a handle cover 22, an inner fender 23, a leg shield 24, a footboard 25, a rear cover 26, and other components.

The front cover 21 is disposed on the front side of the head pipe 11. A pair of left and right flashers 31 and a headlight 32 are mounted in the front cover 21.

The handle cover 22 is disposed above the front cover 21, and covers the steering handle 18. A meter panel 33, having a fuel gauge, a speedometer and the like, is disposed in the top surface of the handle cover 22.

The inner fender 23 is disposed below the front cover 21. The inner fender 23 is disposed behind the front wheel 3, and covers the front wheel 3 from behind. A front fender 27 is disposed above the front wheel 3, and covers the top of the front wheel 3, as illustrated in FIG. 1.

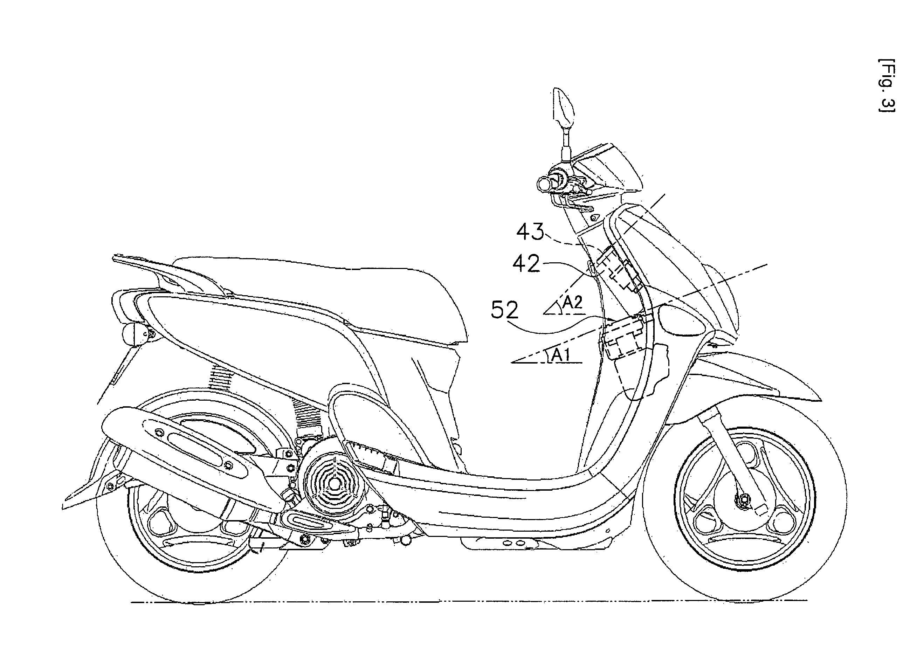

The leg shield 24 is disposed behind the front cover 21 and the inner fender 23, and covers the rear of the head pipe 11 and the front frame 12. The leg shield 24 is connected to the front part of the footboard 25. The leg shield 24 is extended upward from the front part of the footboard 25. The center part of the leg shield 24 in the transverse direction of the vehicle has is formed in a shape rearwardly protruding along the head pipe 11 and the front frame 12. Therefore, the bottom of the center part of the leg shield 24 in the transverse direction of the vehicle is formed in an inclined shape that the bottom side thereof is positioned further rearward than the upper side thereof. A first ridge 41 protruding rearward is provided in the vertically middle part of the left side portion of the leg shield 24. The first ridge 41 has a top surface, a rear surface and a side surface. The rear surface is extended downward from the rear end of the top surface. The side surface is connected to the top surface and the rear surface, and covers the left side in the transverse direction of the vehicle. The right side of the first ridge 41 is connected to the aforementioned center part of the leg shield 24. A fuel filler part 51 to be described is disposed in the top surface of the first ridge 41. A second ridge 42, protruding rearward, is provided in the top of the right side portion of the leg shield 24. A key cylinder 43 is provided in the top surface of the second ridge 42, as illustrated in FIG. 3. A key for starting the engine is inserted into the key cylinder. The second ridge 42 is formed higher than the first ridge 41.

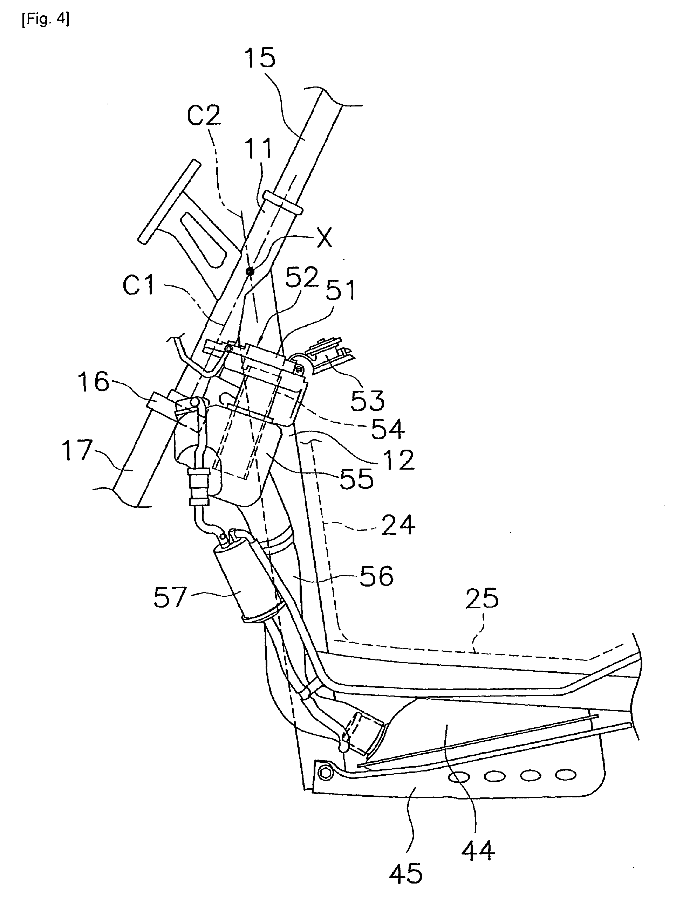

The footboard 25 is a portion on which a rider puts his/her feet. The footboard 25 is disposed between the front wheel 3 and the rear wheel 4. The footboard 25 is disposed in front of the seat 5 while positioned lower than the seat 5. The front part of the footboard 25 is connected to the bottom part of the leg shield 24, whereas the rear part of the footboard 25 is connected to the bottom part of the rear cover 26. A fuel tank 44 for storing fuel is disposed underneath the footboard 25, as illustrated in FIG. 4. A tank guard 45 for protecting the fuel tank 44 is mounted underneath the fuel tank 44.

The rear cover 26, illustrated in FIG. 1, is disposed behind the footboard 25, and is disposed for enclosing the lower periphery of the seat 5.

The aforementioned fuel filler part 51 is partially exposed to the exterior in the first ridge 41 of the leg shield 24. The fuel filler part 51 is a member having a fuel filler opening 52 for supplying fuel to the fuel tank 44, as illustrated in FIG. 4. A fuel filler cap 53 for opening and closing the fuel filler opening 52 is attached to the fuel filler part 51. The fuel filler part 51 has a lock structure (not shown) for locking the fuel filler cap 53 in the closed position. The fuel filler opening 52 is an opening communicated with an internal fuel filler tube 54. The fuel filer opening 52 is provided in the top surface of the fuel filler part 51. The fuel filler tube 54 is inserted into a sub-tank 55 disposed underneath the fuel filler part 51. The fuel filler tube 54 and the sub-tank 55 are accommodated in an internal space enclosed by the front cover 21, the inner fender 23 and the leg shield 24.

The sub-tank 55 and the fuel tank 44 are connected through a fuel pipe 56 made of flexible material (e.g., rubber). A canister 57 for recovering volatile fuel in the fuel tank 44 or another auxiliary device is placed underneath the sub-tank 55. Furthermore, a breather tube (not shown) of the fuel tank 44 and the sub-tank 55 are connected through a breather hose (not shown). The fuel pipe 56, the canister 57, the breather hose and other members are placed to the left of the front frame 12. These members are accommodated in an internal space enclosed by the front cover 21, the inner fender 23, and the leg shield 24. Alternatively, the sub-tank 55 may be omitted, and the fuel filler tube 54 and the fuel tank 44 may be connected through the fuel pipe 56.

The fuel filler opening 52 is disposed lower than the connecting part X between the head pipe 11 and the front frame 12. The fuel filler opening 52 is disposed to the left of the front frame 12 while overlapping with the front frame 12 in a side view. The fuel filler opening 52 is disposed higher than the under bracket 16. Furthermore, the fuel filler opening 52 is disposed lower than the top surface of the key cylinder 43 as illustrated in FIG. 3.

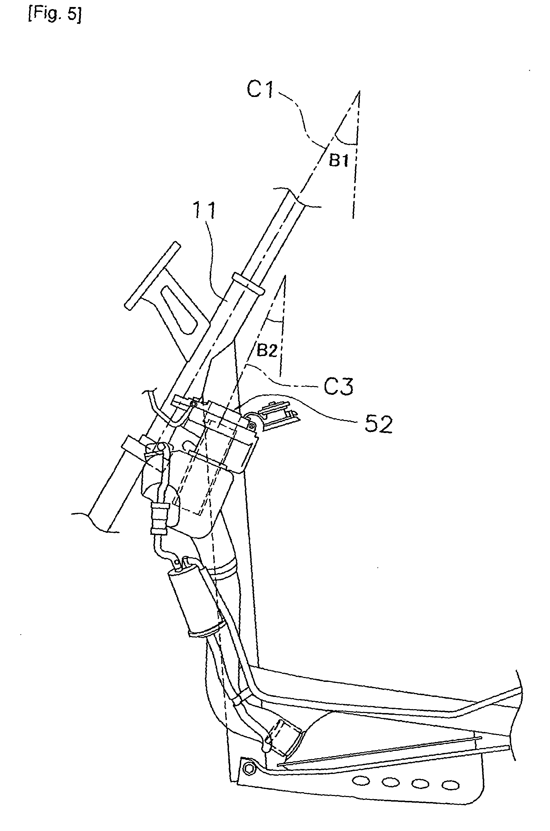

The top surface of the fuel filler part 51 is inclined with respect to a horizontal plane, as illustrated in FIG. 1. Therefore, the fuel filler opening 52 is also inclined with respect to a horizontal plane in the same manner. An angle A1 of the fuel filler opening 52 with respect to a horizontal plane is less than an angle A2 of the top surface of the key cylinder 43 with respect to a horizontal plane, as illustrated in FIG. 3. An axis C3 of the fuel filler opening 52 is inclined with respect to a vertical direction, as illustrated in FIG. 5. An angle B1 of the axis C1 of the head pipe 11 with respect to the vertical direction is greater than an angle B2 of the axis C3 of the fuel filler opening 52 with respect to a vertical direction. The term "axis C3 of the fuel filler opening 52" indicates the center axis of the fuel filler opening 52.

### <Features>

In the scooter vehicle 1, the fuel filler part 51, having the fuel filler opening 52, is provided to the leg shield 24. Therefore, it is possible to easily supply fuel thereto. The fuel filler opening 52 is disposed lower than the connecting part X between the head pipe 11 and the front frame 12. The position of the fuel filler opening 52 is relatively lower than that of a conventional vehicle. The front frame 12 is extended obliquely downward and rearward from the head pipe 11. Therefore, the rearward projection of the fuel filler part 51 from the front frame 12 is reduced.

The space for the rider's feet is sectioned by the leg shield 24, the seat 5, the rear cover 26 and the footboard 25. Specifically, the front side of the space is delimited by the leg shield 24. The rear side thereof is delimited by the seat 5 and the rear cover 26. The bottom side thereof is delimited by the footboard 25. Consequently, the space for rider's legs will be reduced in conjunction with further rearward disposition of the leg shield 24. When the fuel filler part 51 is disposed in the leg shield 24, the leg shield 24 is partially bulged rearward, as does the aforementioned first ridge 41. The leg shield 24 is a cover member for covering the rear of the front frame 12. Therefore, the rearward projection of the leg shield 24 will be increased in conjunction with increase of rearward protrusion of the fuel supply part 51 from the front frame 12. As a result, the space for rider's legs will be reduced.

In view of the above, according to the scooter type vehicle 1 of the present embodiment, the fuel filler part 52 is appropriately disposed for reducing the rearward projection of the fuel filler part 52 from the front frame 12, as described above. Consequently, it is possible to inhibit reduction in the space for rider's legs.

According to the scooter type vehicle 1, it is easy to supply fuel thereto, and a large space can be ensured for rider's legs, as described above.

In the scooter type vehicle 1, the angle A 1 of the fuel filler opening 52 with respect to a horizontal plane is less than the angle A2 of the top surface of the key cylinder 43 with respect to a horizontal plane. Therefore, the fuel filler opening 52 is oriented in a relatively upward direction. Even if the fuel filler opening 52 is disposed in a lower position, accessibility of the fuel filler opening 52 is thereby enhanced and it is easy to supply fuel therefrom.
Moreover, the angle A1 of the fuel filler opening 52 with respect to a horizontal plane is set to be small. Accordingly, it is possible to reduce the longitudinal length of the internal components including e.g., the sub-tank 55 and the fuel filler tube 54 connected to the fuel filler part 51. It is thereby possible to reduce rearward projection of the fuel filler part 51.

In the scooter vehicle 1, the angle B1 of the axis C1 of the head pipe 11 with respect to a vertical direction is greater than the angle B2 of the axis C3 of the fuel filler opening 52 with respect to a vertical direction. Therefore, it is possible to reduce the longitudinal length of the internal components including e.g., the sub-tank 55 and the fuel filler tube 54 connected to the fuel filler part 51. Moreover, it is possible to reduce rearward projection of the fuel filler part 51.

In the scooter type vehicle 1, the fuel filler opening 52 is disposed higher than the under bracket 16. Therefore, a space can be ensured for allowing the under bracket 16 to pivot. Moreover, it is possible to further reduce rearward projection of the fuel filler part 51 than a case that the fuel filler opening 52 is disposed behind the under bracket 16.

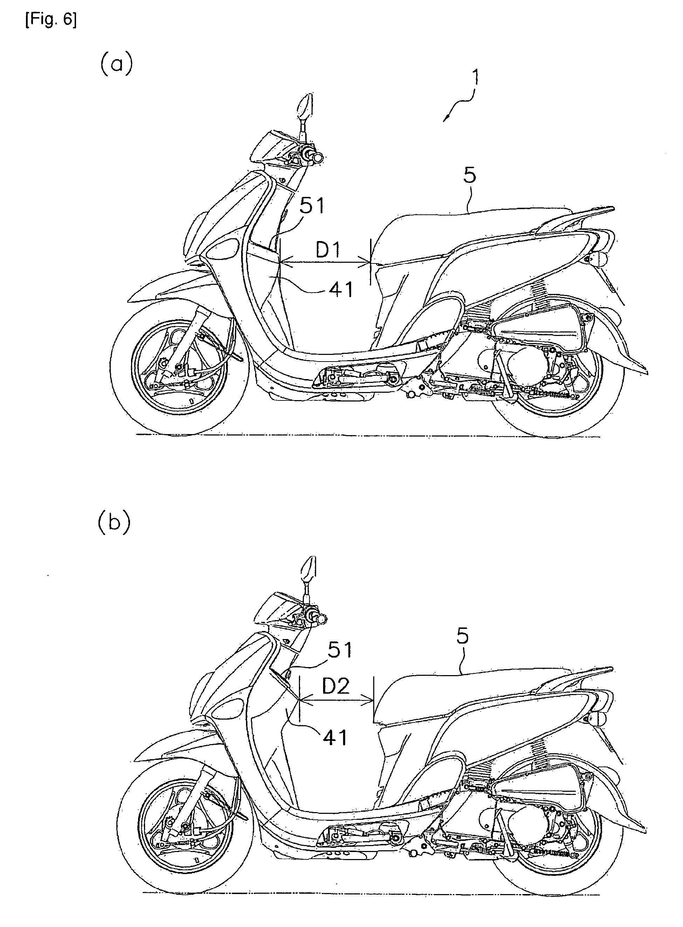

As illustrated in FIG. 6(b), rearward projection of the fuel filler part 51 will be increased when the fuel filler opening 52 is disposed in a higher position as in a conventional scooter type vehicle, under the condition that the forward inclination angle of the front frame 12 is set to be approximately the right angle as described above. As a result, a distance D2 between the seat 5 and the first ridge 41 is reduced, and the space for rider's legs will be accordingly reduced. In the scooter type vehicle 1 of the present embodiment, however, the fuel filler opening 52 is provided in a lower position as described above. Therefore, it is possible to reduce rearward projection of the fuel filler part 51 as illustrated in FIG. 6(a), even if the forward inclination angle of the front frame 12 is set to be a steep angle as described above. As a result, a large distance D1 can be ensured between the seat 5 and the first ridge 41. It is thereby possible to inhibit reduction in the space for rider's legs.

Furthermore, the forward inclination angle of the front frame 12 is set to be a steep angle as described above. This makes it possible to dispose the approximately the bottom end of the front frame 12 in a further forward position than that in a conventional scooter type vehicle in a plan view. Accordingly, it is possible to reliably elongate the longitudinal length of the footboard 25 while it is possible to inhibit increase in the longitudinal length of the entire vehicle. As a result, it is possible to ensure a large space for rider's legs.

Furthermore, the connecting part X between the head pipe 11 and the front frame 12 is positioned higher than the center position M of the head pipe 11 in the axial direction. This makes it possible to sufficiently ensure the distance between the front wheel 3 and the footboard 25. Therefore, a large longitudinal dimension can be ensured for the footboard 25 while enlargement of the wheelbase in the scooter type vehicle 1 can be inhibited. As a result, it is possible to ensure a large space for rider's legs.

### <Example Modifications>

According to the aforementioned embodiment, the vehicle body frame 2 is composed of separate members, including the head pipe 11, the front frame 12 and the rear frames 13, 14. However, the present invention is not limited to this. For example, the entirety of the vehicle body frame 2 may be integrally formed. Alternatively, a part of the vehicle body frame 2 may be integrally formed. Yet alternatively, each of the components of the vehicle body frame 2 may be composed of a plurality of members. Yet alternatively, the vehicle body frame 2 may be composed of a plurality of members obtained by arbitrarily dividing a single component into pieces.

According to the aforementioned embodiment, the vehicle body cover 7 includes the front cover 21, the handle cover 22, the inner fender 23, the leg shield 24, the footboard 25, the rear cover 26 and the like. However, the present invention is not limited to this. The vehicle body cover 7 may be composed of a plurality of members obtained by arbitrarily dividing a single component into pieces.

According to the aforementioned embodiment, the footboard 25 is formed in a flat shape. However, the present invention is not limited to this. For example, a part of the footboard 25 may be protruded upward for disposing the frame and the fuel tank 44 therein. Alternatively, the footboard 25 may be composed of a pair of right and left footrests and a protruding portion. In this case, the footrests are used for disposing rider's feet. The protruding portion is interposed between the pair of footrests in the transverse direction of the vehicle body, and is protruded upward.

### Industrial Applicability

The present invention has an advantageous effect that it is easy to supply fuel and a large space can be ensured for rider's legs, and is useful for a scooter type vehicle.

### Reference Signs List

2 Vehicle body frame
7 Vehicle body cover
3 Front Wheel
10 Front fork
11 Head pipe
12 Front frame
13, 14 Rear frames
17 Suspension
5 Seat
25 Footboard
44 Fuel tank
24 Leg shield
52 Fuel filler opening
51 Fuel filler part
43 Key cylinder
15 Steering shaft
16 Under bracket

## Claims

1. A scooter type vehicle (1), comprising:
a vehicle body frame (2) including:
a head pipe (11);
a front frame (12) extending obliquely downward and rearward from the head pipe (11); and
a rear frame (13, 14) extending rearward from a bottom part of the front frame (12);
a front fork (10) rotatably supported by the head pipe (11), the front fork (10) including a steering shaft (15) inserted into the head pipe (11);
a front wheel (3) disposed in front of the front frame (12), the front wheel (3) supported by the front fork (10), the front wheel (3) allowed to rotate with respect to the head pipe (11);
a seat (5) disposed on the upper part of the rear frame (13, 14);
a vehicle body cover (7) including:
a footboard (25) disposed in front of the seat (5), the footboard (25) positioned lower than the seat (5); and
a leg shield (24) extending upward from the front part of the footboard (25),
the leg shield (24) covering the rear of the front frame (12);
a fuel tank (44) for storing fuel, the fuel tank (44) disposed underneath the footboard (25); and
a fuel filler part (51) disposed in the leg shield (24), the fuel filler part (51) having a fuel filler opening (52) for supplying fuel to the fuel tank (44), the fuel filler opening (52) disposed below a connection part between the head pipe (11) and the front frame (12),
**characterized in that**
the front fork (10) further includes an under bracket (16) disposed in front of the front frame (12), the under bracket coupled to a bottom end of the steering shaft (15), and a suspension (17) having an upper end coupled to the under bracket;
the fuel filler opening (52) is disposed to the side of the front frame (12) while overlapping with the front frame (12) in a side view of the vehicle (1);
the fuel filler opening (52) is disposed higher than the under bracket;
a ridge (41) protruding rearward from the leg shield (24) is provided in the leg shield (24); and
the fuel filler part (51) is disposed in a top surface of the ridge (41) so as to be partially exposed to the exterior of the ridge (41).

2. The scooter type vehicle according to claim 1, further comprising a key cylinder (43) provided in the leg shield (24),
wherein an angle (A1) of the fuel filler opening (52) with respect to a horizontal plane is less than an angle (A2) of the top surface of the key cylinder with respect to the horizontal plane.

3. The scooter type vehicle according to claim 1 or 2, wherein an angle (B1) of an axis (C1) of the head pipe (11) with respect to a vertical direction is greater than an angle (B2) of an axis (C3) of the fuel filler opening (52) with respect to the vertical direction.

4. The scooter type vehicle according to any one of claims 1 to 3, wherein the connection part (X) between the head pipe (11) and the front frame (12) is positioned higher than an axial center position (M) of the head pipe (11).

## Patentansprüche

1. Ein Roller-Typ-Fahrzeug (1), das folgende Merkmale aufweist:
einen Fahrzeugkörperrahmen (2) mit:
einem Kopfrohr (11);
einem Vorderrahmen (12), der sich von dem Kopfrohr (11) schräg nach unten und nach hinten erstreckt; und
einem Hinterrahmen (13, 14), der sich von einem unteren Teil des Vorderrahmens (12) nach hinten erstreckt;
eine Vordergabel (10), die drehbar durch das Kopfrohr (11) getragen wird, wobei die Vordergabel (10) eine Lenkwelle (15) umfasst, die in das Kopfrohr (11) eingeführt ist;
ein Vorderrad (3), das vor dem Vorderrahmen (12) angeordnet ist, wobei das Vorderrad (3) durch die Vordergabel (10) getragen wird und sich das Vorderrad (3) in Bezug auf das Kopfrohr (11) drehen kann;
einen Sitz (5), der auf dem oberen Teil des Hinterrahmens (13, 14) angeordnet ist;
eine Fahrzeugkörperabdeckung (7) mit:
einem Trittbrett (25), das vor dem Sitz (5) angeordnet ist, wobei das Trittbrett (25) niedriger positioniert ist als der Sitz (5); und
einem Beinschild (24), das sich von dem vorderen Teil des Trittbretts (25) nach oben erstreckt, wobei das Beinschild (24) die Rückseite des Vorderrahmens (12) bedeckt;
einen Kraftstofftank (44) zum Lagern von Kraftstoff, wobei der Kraftstofftank (44) unterhalb des Trittbretts (25) angeordnet ist; und
ein Kraftstoffeinfüllerteil (51), das in dem Beinschild (24) angeordnet ist, wobei das Kraftstoffeinfüllerteil (51) eine Kraftstoffeinfülleröfnung (52) zum Zuführen von Kraftstoff in den Kraftstofftank (44) aufweist, wobei die Kraftstoffeinfülleröffnung (52) unter einem Verbindungsteil zwischen dem Kopfrohr (11) und dem Vorderrahmen (12) angeordnet ist,
**dadurch gekennzeichnet, dass**:
die Vordergabel (10) ferner eine untere Halterung (16), die vor dem Vorderrahmen (12) angeordnet ist, wobei die untere Halterung mit einem unteren Ende der Lenkwelle (15) gekoppelt ist, und eine Aufhängung (17), deren oberes Ende mit der unteren Halterung gekoppelt ist, umfasst;
die Kraftstoffeinfülleröffnung (52) an der Seite des Vorderrahmens (12) angeordnet ist, während dieselbe den Vorderrahmen (12) in einer Seitenansicht des Fahrzeugs (1) überlappt;
die Kraftstoffeinfülleröfnung (52) höher angeordnet ist als die untere Halterung;
ein Steg (41), der von dem Beinschild (24) nach hinten vorsteht, in dem Beinschild (24) vorgesehen ist; und
das Kraftstoffeinfüllerteil (51) in einer oberen Oberfläche des Stegs (41) angeordnet ist, so dass dieses gegenüber dem Äußeren des Stegs (41) teilweise frei liegt.

2. Das Roller-Typ-Fahrzeug (1) gemäß Anspruch 1, das ferner einen Schlüsselzylinder (43) aufweist, der in dem Beinschild (24) vorgesehen ist,
wobei ein Winkel (A1) der Kraftstoffeinfülleröfnung (52) in Bezug auf eine horizontale Ebene kleiner ist als ein Winkel (A2) der oberen Oberfläche des Schlüsselzylinders in Bezug auf die horizontale Ebene.

3. Das Roller-Typ-Fahrzeug gemäß Anspruch 1 oder 2, bei dem ein Winkel (B1) einer Achse (C1) des Kopfrohrs (11) in Bezug auf eine Vertikalrichtung größer ist als ein Winkel (B2) einer Achse (C3) der Kraftstoffeinfülleröfnung (52) in Bezug auf die Vertikalrichtung.

4. Das Roller-Typ-Fahrzeug gemäß einem der Ansprüche 1 bis 3, bei dem das Verbindungsteil (X) zwischen dem Kopfrohr (11) und dem Vorderrahmen (12) höher angeordnet ist als eine axiale Mittelposition (M) des Kopfrohrs (11).

## Revendications

1. Véhicule de type scooter (1), comprenant:
une ossature de carrosserie de véhicule (2) comportant:
un tube principal (11);
une ossature avant (12) s'étendant obliquement vers le bas et
vers l'arrière depuis le tube principal (11); et
un ossature arrière (13, 14) s'étendant vers l'arrière depuis une partie inférieure de l'ossature avant (12);
une fourche avant (10) supportée de manière rotative par le tube principal (11), la fourche avant (10) comportant un arbre de direction (15) introduit dans le tube principal (11);
une roue avant (3) disposée à l'avant de l'ossature avant (12), la roue avant (3) étant supportée par la fourche avant (10), la roue avant (3) pouvant tourner par rapport au tube principal (11);
un siège (5) disposé sur la partie supérieure de l'ossature arrière (13, 14);
un carter de carrosserie de véhicule (7), comportant:
un marchepied (25) disposé à l'avant du siège (5), le marchepied (25) étant positionné plus bas que le siège (5); et
un protège-jambe (24) s'étendant vers le haut depuis la partie avant du marchepied (25), le protège-jambe (24) couvrant l'arrière de l'ossature avant (12);
un réservoir à carburant (44) destiné à entreposer du carburant, le réservoir à carburant (44) étant disposé au-dessous du marchepied (25); et
une partie de remplissage de carburant (51) disposée dans le protège-jambe (24), la partie de remplissage de carburant (51) présentant une ouverture de remplissage de carburant (52) destinée à alimenter du carburant dans le réservoir à carburant (44), l'ouverture de remplissage de carburant (52) étant disposée au-dessous d'une partie de connexion entre le tube principal (11) et l'ossature avant (12),
**caractérisé par le fait que**
la fourche avant (10) comporte par ailleurs une sous-console (16) disposée à l'avant de l'ossature avant (12), la sous-console étant couplée à une extrémité inférieure de l'arbre de direction (15), et une suspension (17) présentant une extrémité supérieure couplée à la sous-console;
l'ouverture de remplissage de carburant (52) est disposée du côté de l'ossature avant (12) tout en venant en recouvrement avec l'ossature avant (12) dans une vue latérale du véhicule (1);
l'ouverture de remplissage de carburant (52) est disposée plus haut que la sous-console;
une arête (41) faisant saillie vers l'arrière depuis le protège-jambe (24) est prévue dans le protège-jambe (24); et
la partie de remplissage de carburant (51) est disposée dans une surface supérieure de l'arête (41) de manière à être partiellement exposée à l'extérieur de l'arête (41).

2. Véhicule de type scooter selon la revendication 1, comprenant par ailleurs un cylindre à clé (43) prévu dans le protège-jambe (24),
dans lequel un angle (A1) de l'ouverture de remplissage de carburant (52) par rapport à un plan horizontal est inférieur à un angle (A2) de la surface supérieure du cylindre à clé par rapport au plan horizontal.

3. Véhicule de type scooter selon la revendication 1 ou 2, dans lequel un angle (B1) d'un axe (C1) du tube principal (11) par rapport à une direction verticale est supérieur à un angle (B2) d'un axe (C3) de l'ouverture de remplissage de carburant (52) par rapport à la direction verticale.

4. Véhicule de type scooter selon l'une quelconque des revendications 1 à 3, dans lequel la partie de connexion (X) entre le tube principal (11) et l'ossature avant (12) est positionnée plus haut qu'une position centrale axiale (M) du tube principal (11).
